# EUROPÄISCHE PATENTSCHRIFT

(11) **EP 1 143 373 B1**
(45) Veröffentlichungstag und Bekanntmachung des Hinweises auf die Patenterteilung: **16.07.2008**
(21) Anmeldenummer: 00107388.1
(22) Anmeldetag: 05.04.2000
(51) Int. Cl.: G06K 9/00, G06K 9/20

(54) **Verfahren zur störanteilsfreien Bilderfassung mittels eines elektronischen Sensors**
Method for error-free image acquisition using an electronic sensor
Méthode pour acquérir des images sans erreur avec un capteur électronique

(43) Veröffentlichungstag der Anmeldung: 10.10.2001
(73) Patentinhaber: Infineon Technologies AG, 81669 München (DE)
(72) Erfinder: Wirtz, Brigitte, Dr. rer. nat., 83607 Holzkirchen (DE)
(74) Vertreter: Epping - Hermann - Fischer

(56) Entgegenhaltungen:
- WO-A-99/26187
- JP-A- 11 144 058
- US-A- 5 987 156
- US-A- 6 064 753

## Beschreibung

Die vorliegende Erfindung betrifft ein Verfahren zum korrekten und störanteilsfreien Erfassen eines Bildes, das von einem elektronischen Sensor, insbesondere von einem kapazitiv messenden elektronischen Sensor, wie z. B. einem Fingerabdrucksensor, aufgenommen wird.

Bei kapazitiv arbeitenden Sensoren zur Bilderfassung z.B. wie offenbart durch A. Russo im Patentschrift WO 9926187 befindet sich an einer Sensorfläche eine rasterförmige Anordnung von Leiterflächen, die die einzelnen Sensorelemente bilden. Die von dem Sensor erreichte Abbildungsqualität, insbesondere Kontrast und Helligkeit, ist abhängig davon, wie gut die Verbindung zu dem die gemessenen Kapazitätsänderungen hervorrufenden Bild ist, insbesondere bei einem hier hauptsächlich interessierenden Fingerabdrucksensor, wie fest eine Fingerkuppe auf die Auflagefläche des Fingerabdrucksensors aufgelegt wird. Wird der Finger nur leicht aufgelegt, so ergibt sich ein Fingerabdruckbild mit kleiner Fläche und nur geringen dunklen Grauanteilen. Wird der Finger fest auf den Sensor gedrückt, dann vergrößert sich die Fläche des Fingerabdruckbildes, und die Grauanteile im Bild verschieben sich zu dunkleren Werten hin. Wenn der Finger beim Auflegen einen geringen Abstand zu der Auflagefläche erreicht, kann bereits ein noch unvollkommenes Fingerabdruckbild erzeugt werden, da die gegenüber der Hautoberfläche gemessene Kapazität der Leiterflächen bereits einen Unterschied zu dem Grundzustand des Sensors ausmachen kann.

Eine solche noch unvollkommene Abbildung, die während des Herstellens der Verbindung zu dem zu erfassenden Bild erzeugt wird, kann störende Anteile enthalten, die für sich allein nicht in Erscheinung treten, aber in Verbindung mit den durch das angekoppelte Bild verursachten Kapazitätsänderungen die Wiedergabe des aktuell erfassten Bildes verfälschen. Diese störenden Anteile können von Verschmutzungen oder Beschädigungen der Auflagefläche herrühren und sind in der Regel so schwach, dass sie nicht als eigenständiges Bild erfasst werden können.

Kapazitiv messende Fingerabdrucksensoren sind Bestandteile biometrischer Identifikationssysteme zur Personenerkennung oder zur Verifizierung einer Zugangsberechtigung, bei denen mit elektronischen Mitteln ein Fingerabdruck aufgenommen und dessen wesentliche Ausprägungen mit abgespeicherten Referenzdaten verglichen werden. Referenzdaten sind insbesondere die sogenannten Minutien, die die relevanten Punkte des Fingerabdrucks darstellen. Diese Punkte sind besonders die Verzweigungsstellen der Furchen und Stege der Hautoberfläche. Es ist denkbar, dass die durch eine dünne Fettschicht gebildeten Rückstände, die nach dem Auflegen eines Fingers auf der Auflagefläche bleiben, erneut zur Aufnahme des Fingerabdruckes verwendet werden. Eine weitere Schwierigkeit besteht darin, dass die erwähnten Rückstände oder verschiedene andere Arten von Verschmutzungen der für den Finger vorgesehenen Auflagefläche ein verfälschtes Fingerabdruckbild oder eine zu große Zahl an Minutien liefern.

Aufgabe der vorliegenden Erfindung ist es, ein Verfahren zur korrekten und störanteilsfreien Bilderfassung mittels eines elektronischen, insbesondere kapazitiv arbeitenden, Sensors anzugeben, das insbesondere zur Anwendung mit einem Fingerabdrucksensor geeignet ist.

Diese Aufgabe wird mit dem Verfahren mit den Merkmalen des Anspruches 1 gelöst. Ausgestaltungen ergeben sich aus den abhängigen Ansprüchen.

Bei dem erfindungsgemäßen Verfahren wird während des Ankoppelns eines zu erfassenden Bildes an den Sensor in kurzer Abfolge eine Sequenz von Abbildungen aufgenommen; insbesondere wird bei einem Fingerabdrucksensor während des Auflegens eines Fingers auf den Sensor eine Sequenz von Fingerabdruckbildern aufgenommen. Diese Bildsequenz wird verwendet, um durch einen programmierbaren Bildverarbeitungsalgorithmus oder eine andere vorzugsweise automatisierbare Weise zu bestimmen, welche der abgebildeten Einzelheiten (insbesondere Minutien eines Fingerabdruckes) von einem aktuell angekoppelten Bild (aufgelegten Finger) stammen und was nur auf Grund von Verschmutzungen der Sensorfläche (Auflagefläche) wiedergegeben wird. Zu diesem Zweck wird festgestellt, welche der Abbildungen (welches der Fingerabdruckbilder) in dem Sinn optimal ist, dass sie das aktuelle Bild (den aktuellen Fingerabdruck) bestmöglich erfasst. Durch einen Vergleich dieser besten Abbildung mit vorhergehenden Abbildungen der betreffenden Sequenz werden die wirklichen Bestandteile des aktuellen Bildes bestimmt und die übrigen Bestandteile aus der besten Abbildung eliminiert.

Beispiele für ein mit einem kapazitiv arbeitenden Fingerabdrucksensor ausgeführtes Verfahren, das in einer Übersicht in dem beigefügten Flussdiagramm dargestellt ist, werden nachfolgend beschrieben.

Kapazitiv messende Sensoren besitzen die Eigenschaft, Bilddaten bereits zu erzeugen, wenn sich das zu erfassende Bild (Fingerlinien) noch in einem Abstand zu dem Sensor befindet, da es zur Änderung der erfassten Kapazität zwischen Sensorelementen und der Bildoberfläche nicht erforderlich ist, dass das Bild vollständig angekoppelt ist, der Finger wirklich aufliegt. Dies führt dazu, dass sich das erfasste Fingerabdruckbild laufend verändert, während ein Finger angenähert und aufgelegt wird, bis der volle Auflagedruck auf der Auflagefläche erreicht ist. Bei diesem Vorgang wird das Fingerabdruckbild zunächst im wesentlichen durch unerwünschte Bestandteile bestimmt, die beispielsweise durch den Zustand der Auflagefläche bedingt sind, während die Einzelheiten des Fingers nur schwach ausgeprägt sind. Mit zunehmender Annäherung des Fingers an die Auflagefläche werden die Details des Fingers deutlicher wiedergegeben. Es bleibt aber bis zu einem gewissen Ausmaß bei einer Vermischung von unerwünschten und wesentlichen Komponenten des Bildes.

Um die unerwünschten Bestandteile aus dem Bild beseitigen zu können, wird erfindungsgemäß ein Verfahren eingesetzt, das aus einer Sequenz von in kurzer Folge nacheinander mit dem Sensor aufgenommenen Abbildungen eine für eine Weiterverarbeitung am besten geeignete Abbildung bestimmt, beispielsweise durch eine Auswertung mittels an sich bekannter Mustererkennungsmethoden. Aus einer Bildsequenz, die während des Auflegens eines Fingers auf den Sensor aufgenommen wird, wird dasjenige Bild der Sequenz bestimmt, das einem typischen Fingerabdruck am ehesten entspricht oder in dem die Fingerlinien am deutlichsten ausgeprägt sind. Die Abbildungen der Sequenz können in konstant vorgegebenen Zeitabständen aufgenommen werden; statt dessen können die Abbildungen aufgenommen werden, wenn sich vorgegebene bestimmte minimale Änderungen gegenüber der vorhergehend aufgenommenen Abbildung ergeben haben. Das erfindungsgemäße Verfahren ist nicht auf einen bestimmten Algorithmus zur Mustererkennung oder Bilderkennung beschränkt. Es kommt bei diesem Schritt des Verfahrens nur darauf an, mittels an sich bekannter Methoden ein Bild aus der aufgenommenen Bildsequenz auszuwählen, das als Ausgangsbild für die weiteren Verfahrensschritte geeignet ist.

Dieses Ausgangsbild B_{T} ist z. B das erste Bild der Sequenz, das mindestens einen vorgegebenen Kontrast oder Helligkeitswert bzw. Schwärzungswert aufweist, das bei Anwendung eines (weiteren) Algorithmus zur Extraktion der Minutien mindestens eine vorgegebene Qualität des Ergebnisses liefert, die im einfachsten Fall z. B. durch eine vorgegebene Mindestanzahl bestimmbarer Minutien definiert sein kann, oder das sich von den in der Bildsequenz unmittelbar vorher und nachher aufgenommenen Bildern (ggf. deutlich) weniger unterscheidet, als das für aufeinanderfolgende Bilder der Sequenz sonst der Fall ist (kurzzeitiger stationärer Zustand bei vollem Aufliegen des Fingers). Wie ersichtlich ist, lässt sich aus der hier beschriebenen technischen Lehre eine Reihe von Ausgestaltungen für bevorzugte Verfahrensschritte ableiten, mit denen ein Ausgangsbild bestimmt werden kann, das für eine effiziente Durchführung der weiteren zu erläuternden Verfahrensschritte geeignet ist. Das geschieht mit einem Aufwand, der sich im wesentlichen in dem Rahmen bewegt, der durch die in einem biometrischen System ohnehin nötige Implementierung von Algorithmen gegeben ist.

In einem weiteren Verfahrensschritt wird ein Korrekturbild B_{S} bestimmt, das möglichst weitgehend demjenigen Bild entspricht, um das sich der eigentlich abzubildende Fingerabdruck von dem ausgewählten Ausgangsbild B_{T} unterscheidet. Das Korrekturbild ist vorzugsweise die letzte Abbildung der aufgenommenen Sequenz, die den Fingerabdruck soeben noch nicht oder jedenfalls noch nicht deutlich wiedergibt, oder zumindest eine derartige Abbildung, die in der Sequenz möglichst spät erscheint. Das Korrekturbild B_{S} kann aus der Bildsequenz beispielsweise dadurch selektiert werden, dass ein vorgegebenes Mindestmaß für die Qualität der Bildwiedergabe überschritten ist, ohne dass das Ausgangsbild B_{T} bereits erkennbar ist. Eine weitere Möglichkeit besteht darin, als Korrekturbild B_{S} grundsätzlich diejenige Abbildung auszuwählen, die um eine bestimmte vorgegebene Anzahl von Abbildungen in der Sequenz vor dem ausgewählten Ausgangsbild B_{T} aufgenommen wurde.

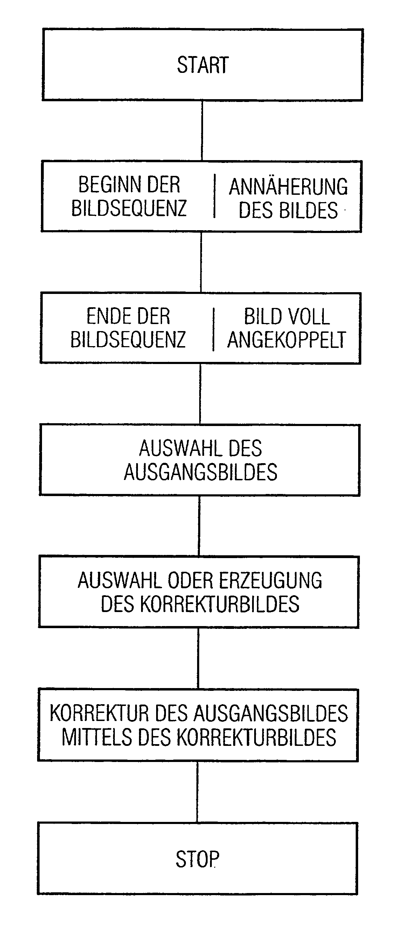

Es ist auch möglich, zur Ermittlung des Korrekturbildes B_{S} mehrere Abbildungen der Sequenz heranzuziehen und über diese Abbildungen einen geeigneten Mittelwert zu bilden, wozu insbesondere die üblicherweise bei elektronisch erfassten Bildern vorgenommene Unterteilung in Bildpunkte (Pixel) nützlich ist. Zumindest für die zentralen oder sonstwie wesentlichen Bildpunkte wird beispielsweise und vorzugsweise gemittelt über die mit dem Sensor an dem betreffenden Bildpunkt erfassten Grauwerte je einer Abbildung innerhalb eines Abschnittes aus der Sequenz. Das gesuchte Fingerabdruckbild kann auch direkt erzeugt werden, indem bei dieser Mittelung die Differenzen der jeweiligen Grauwerte zwischen dem Ausgangsbild B_{T} und je einer Abbildung aus dem Abschnitt der Sequenz verwendet werden. Der Abschnitt der Sequenz, der für die Mittelung herangezogen wird, wird so gewählt, dass er Abbildungen enthält, die bereits deutlich ausgeprägt sind, aber erst unerhebliche Anteile des aktuell zu erfassenden tatsächlichen Fingerabdrucks enthalten. Je nach der Position der in die Mittelung einbezogenen Abbildung innerhalb der Sequenz, d. h. je nach dem Abstand der Abbildung von dem Ausgangsbild B_{T}, kann eine unterschiedliche Gewichtung des von dieser Abbildung beigesteuerten Anteils am Mittelwert vorgenommen werden. Außerdem kann bei der Mittelung über die Differenzen zwischen B_{T} und den vorhergehenden Abbildungen ein Schwellwert festgelegt werden, ab dem eine ermittelte Differenz als signifikante Änderung überhaupt nur in die Rechnung einbezogen wird.

Die hier beschriebenen Beispiele sind nicht auf die Ausführung des Verfahrens mit einem Fingerabdrucksensor beschränkt; auch andere Sensoren zur Bilderfassung, bei denen das Problem auftretender Nachbilder oder durch Verschmutzungen oder dergleichen verursachter Störanteile beseitigt werden soll und mit denen kein ausschließlich diese Störungen enthaltendes Bild aufgenommen werden kann, können mit dem erfindungsgemäßen Verfahren in die Lage versetzt werden, von den Störungen befreite Abbildungen des jeweils zu erfassenden Bildes zu generieren. Es muss dazu nur die Möglichkeit gegeben sein, eine Sequenz kurz nacheinander erzeugter Abbildungen aufzunehmen, in denen außer dem zu erfassenden Bild auch die Störanteile in sich kontinuierlich ändernder Deutlichkeit in Erscheinung treten. Ein Ausgangsbild wird in Abhängigkeit von dem benutzten Sensor und der Art der Bilderzeugung so gewählt, dass es sich durch einen Vergleich mit anderen Abbildungen der Sequenz leicht um die Störanteile bereinigen lässt.

## Patentansprüche

1. Verfahren zur störanteilsfreien Bilderfassung mittels eines elektronischen Sensors, bei dem
ein zu erfassendes Bild kontinuierlich stärker an den Sensor angekoppelt wird,
währenddessen mittels des Sensors eine Sequenz von Abbildungen aufgenommen wird,
aus der Sequenz eine Abbildung nach vorgegebenen Kriterien als Ausgangsbild (B_{T}) gewählt wird,
aus der Sequenz mindestens eine weitere Abbildung als Korrekturbild (Bₛ) gewählt wird oder zur Bestimmung eines Korrekturbildes herangezogen wird und
das Ausgangsbild durch Subtraktion des Korrekturbildes korrigiert wird.

2. Verfahren nach Anspruch 1, bei dem
als Sensor ein kapazitiv arbeitender Sensor verwendet wird und das zu erfassende Bild durch Annäherung an eine dafür vorgesehene Auflagefläche des Sensors kontinuierlich stärker an den Sensor angekoppelt wird.

3. Verfahren nach Anspruch 1 oder 2, bei dem
als Ausgangsbild (B_{T}) eine Abbildung gewählt wird, die mittels eines Mustererkennungsalgorithmus als für die Art des zu erfassenden Bildes am typischsten oder als am deutlichsten ausgeprägt erkannt wird.

4. Verfahren nach einem der Ansprüche 1 bis 3, bei dem
eine Abbildung für das Korrekturbild (Bₛ) gewählt wird, die in der Sequenz von Abbildungen um eine bestimmte vorgegebene Anzahl von Abbildungen vor der als Ausgangsbild (B_{T}) gewählten Abbildung erscheint.

5. Verfahren nach einem der Ansprüche 1 bis 4, bei dem
das Korrekturbild (Bₛ) durch eine Mittelung über mehrere Abbildungen der Sequenz bestimmt wird.

6. Verfahren nach Anspruch 5, bei dem
eine gewichtete Mittelung ausgeführt wird, in der die Abbildungen unterschiedlich stark berücksichtigt werden.

7. Verfahren nach einem der Ansprüche 1 bis 6, bei dem
als Sensor ein Fingerabdrucksensor verwendet wird und
als das zu erfassende Bild ein Fingerabdruck erfasst wird.

## Claims

1. Method for disturbance-free image acquisition by means of an electronic sensor, in which
an image to be acquired is coupled to the sensor continuously to a greater extent,
in the meantime a sequence of imagings is recorded by means of the sensor,
from the sequence one imaging is chosen as starting image (B_{T}) according to predetermined criteria
from the sequence at least one further imaging is chosen as correction image (Bₛ) or is used for determining a correction image, and
the starting image is corrected by subtraction of the correction image.

2. Method according to Claim 1, in which
a sensor which operates capacitively is used as the sensor and the image to be acquired is coupled to the sensor continuously to a greater extent by approaching a sensor bearing area provided for it.

3. Method according to Claim 1 or 2, in which
the starting image (B_{T}) chosen is an imaging which a pattern recognition algorithm recognizes as the most typical for the type of image to be acquired or as the most clearly pronounced.

4. Method according to one of Claims 1 to 3, in which an imaging is chosen for the correction image (Bₛ) which, in the sequence of imagings, appears a specific predetermined number of imagings before the imaging chosen as the starting image (B_{T}).

5. Method according to one of Claims 1 to 4, in which the correction image (B_{S}) is determined by averaging over a plurality of imagings of the sequence.

6. Method according to Claim 5, in which
a weighted averaging is carried out in which the imagings are taken into account to different extents.

7. Method according to one of Claims 1 to 6, in which a fingerprint sensor is used as the sensor and a fingerprint is acquired as the image to be acquired.

## Revendications

1. Procédé d'acquisition d'images sans composante parasite au moyen d'un capteur électronique, dans lequel
une image à acquérir est couplée de plus en plus continuellement au capteur,
tandis qu'une séquence de reproductions est enregistrée au moyen du capteur,
une reproduction est choisie comme image de départ (B_{T}) dans la séquence en fonction de critères prescrits,
au moins une autre reproduction est choisie dans la séquence comme image de correction (B_{S}) ou est utilisée pour déterminer une image de correction et
l'image de départ est corrigée par soustraction de l'image de correction.

2. Procédé selon la revendication 1, dans lequel on utilise comme capteur un capteur à fonctionnement capacitif et l'image à acquérir est couplée de plus en plus continuellement au capteur en l'approchant d'une surface d'appui, prévue pour cela, du capteur.

3. Procédé selon la revendication 1 ou 2, dans lequel on choisit comme image de départ (B_{T}) une reproduction qui est acquise au moyen d'un algorithme de reconnaissance de modèle en étant **caractérisée** comme la plus typique ou la plus nette.

4. Procédé selon l'une des revendications 1 à 3, dans lequel on choisit pour l'image de correction (Bₛ) une reproduction qui apparaît dans la séquence de reproductions un nombre déterminé prescrit de reproductions avant la reproduction choisie comme image de départ (B_{T}) .

5. Procédé selon l'une des revendications 1 à 4, dans lequel l'image de correction (Bₛ) est déterminée en effectuant une moyenne sur plusieurs reproductions de la séquence.

6. Procédé selon la revendication 5, dans lequel on effectue une moyenne pondérée dans laquelle les reproductions sont prises en compte de façon plus ou moins importantes.

7. Procédé selon l'une des revendications 1 à 6, dans lequel le capteur utilisé est un capteur d'empreintes digitales et l'image à acquérir est une empreinte digitale.
